(19) Europäisches Patentamt
European Patent Office
Office européen des brevets

(11) **EP 3 034 827 B1**

(12) **FASCICULE DE BREVET EUROPEEN**

(45) Date de publication et mention
de la délivrance du brevet:
**09.08.2017   Bulletin 2017/32**

(51) Int Cl.:
***F01N 11/00*** *(2006.01)*      *F01N 3/08* *(2006.01)*

(21) Numéro de dépôt: **15199474.6**

(22) Date de dépôt: **11.12.2015**

(54) **PROCÉDÉ DE DIAGNOSTIC D'UN PIÈGE À OXYDES D'AZOTE ET DISPOSITIF ASSOCIÉ**

DIAGNOSEVERFAHREN EINES STICKOXIDSPEICHERS UND ENTSPRECHENDE VORRICHTUNG

NITROGEN OXIDE TRAP DIAGNOSING METHOD AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2014   FR 1462494**

(43) Date de publication de la demande:
**22.06.2016   Bulletin 2016/25**

(73) Titulaire: **Renault S.A.S.**
**92100 Boulogne-Billancourt (FR)**

(72) Inventeurs:
- **SELLAMI, Ali**
  **75012 PARIS (FR)**
- **THUILLIER, Pascal**
  **45770 SARAN (FR)**
- **BERTRAND, Gregory**
  **92600 ASNIERES (FR)**

(56) Documents cités:
**FR-A1- 2 871 849     US-B1- 8 065 871**

EP 3 034 827 B1

**Description**

DOMAINE TECHNIQUE DE L'INVENTION

L'invention concerne un procédé de diagnostic de l'état de fonctionnement d'un piège à oxydes d'azote. Elle concerne également un dispositif apte à la mise en oeuvre d'un tel procédé. Elle trouve une application avantageuse sous la forme d'un diagnostic embarqué dans un véhicule automobile équipé d'un moteur diesel associé à un piège à oxydes d'azotes.

ETAT DE LA TECHNIQUE

De nombreux moteurs modernes à combustion interne, en particulier les moteurs diesel des véhicules automobiles, sont équipés d'un piège à oxydes d'azote ($NO_x$) pour respecter les normes légales qui limitent les émissions à l'échappement de polluants par ces véhicules.

Un piège à oxydes d'azote est généralement placé dans la ligne d'échappement d'un véhicule et fonctionne de manière discontinue, selon deux modes distincts.

Pendant le fonctionnement habituel du moteur en mélange pauvre, le piège retient une partie des molécules de $NO_x$ émises par le moteur sur différents compartiments catalytiques de stockage, le reste étant rejeté dans l'atmosphère après avoir traversé le piège. Le pourcentage de molécules de $NO_x$ du moteur qui est retenu par le piège est appelé efficacité de stockage.

Quand la masse de $NO_x$ stockée dans le piège atteint un seuil prédéterminé en fonction de la capacité maximale de stockage, un basculement provoqué du fonctionnement du moteur en mélange riche, c'est-à-dire avec un défaut d'oxygène par rapport à la stoechiométrie, permet de régénérer le piège.

La phase de régénération consiste à purger le piège des $NO_x$ accumulés lors de la phase de fonctionnement de stockage. Au cours de cette phase de fonctionnement en mélange riche, des réducteurs (hydrocarbures imbrûlés HC et monoxyde de carbone CO) provenant du moteur passent dans le piège et réduisent les molécules de $NO_x$ en molécules d'azote $N_2$ et de dioxyde de carbone $CO_2$.

Sous l'effet du vieillissement, et parfois d'événements accidentels tels que des chocs thermiques ou mécaniques, l'efficacité de stockage d'un piège à oxydes d'azote diminue, à cause de la baisse du nombre de compartiments catalytiques disponibles dans le piège pour stocker les molécules de $NO_x$.

Pour s'assurer que les rejets dans l'atmosphère des gaz d'échappement d'un véhicule automobile sont en permanence conformes aux normes légales, il est courant de surveiller l'état de fonctionnement de son piège à oxydes d'azote, c'est-à-dire de tester son efficacité de stockage, grâce à un diagnostic embarqué.

On connaît plusieurs procédés qui visent à surveiller l'état de fonctionnement d'un piège à oxydes d'azote. Plusieurs d'entre eux, par exemple celui qui est divulgué dans la publication FR 2 940 356-B1, proposent de déterminer la masse de réducteurs utilisée pendant une phase de purge en mode riche d'un piège à oxydes d'azote, et de comparer ce rapport avec un seuil.

Pour remédier au manque de précision du diagnostic prévu dans la publication FR 2 940 356-B1, entraînant des risques de non-détection (piège défaillant déclaré bon) et de fausse détection (piège bon déclaré défaillant), plusieurs perfectionnements ont été proposés :

Dans la demande de brevet français FR 13 60331, la demanderesse a proposé que la masse de réducteurs servant à la comparaison avec un seuil soit déterminée pendant une seconde étape de purge du piège provoquée après un court délai de temporisation suivant une première étape de purge normale du piège.

Dans la demande de brevet français FR 13 60334, la demanderesse a proposé que la masse de réducteurs servant à la comparaison avec un seuil soit déterminée au cours d'une étape de purge spéciale du piège réalisée aux fins du diagnostic à une deuxième valeur de richesse de fonctionnement du moteur qui est supérieure à une première valeur de richesse de fonctionnement d'une étape de purge normale du piège.

Dans la demande de brevet français FR 13 60337, la demanderesse a proposé que la masse de réducteurs servant à la comparaison avec un seuil soit déterminée au cours d'une étape de purge prolongée après l'épuisement des oxydes d'azote stockés dans le piège, c'est-à-dire au-delà de la durée d'une purge normale.

On connaît aussi de la publication FR 2 871 849-A1 un procédé de diagnostic d'un piège à oxydes d'azote de moteur à combustion interne, ledit piège étant apte à décomposer, pendant une étape de purge, les oxydes d'azote stockés dans le piège par réaction avec du carburant du moteur, comprenant : une étape de détermination de la richesse à l'entrée et à la sortie du piège pendant la durée de la purge ; une étape de calcul d'au moins un critère de diagnostic à partir d'un ensemble de paramètres comportant au moins la richesse à l'entrée et la richesse à la sortie ; et, une étape de jugement de l'état bon ou défaillant du piège basé sur la comparaison dudit critère de diagnostic avec un seuil.

Les procédés prévus dans ces demandes de brevets permettent d'améliorer la précision du diagnostic, mais la mise en oeuvre du diagnostic est intrusive, c'est-à-dire qu'elle oblige à perturber le fonctionnement normal des purges du piège. Dans ces différents procédés, il est nécessaire de provoquer une étape de purge spécifique : soit une étape de purge additionnelle, soit une étape de purge modifiée à richesse plus élevée, soit une étape de purge rallongée. Dans tous les cas, il en résulte une augmentation de la consommation de carburant et une dilution accrue du carburant dans l'huile du moteur.

RESUME DE L'INVENTION

L'invention propose de remédier au manque de précision et aux risques de diagnostics erronés des procédés de diagnostics connus des pièges à oxydes d'azote, sans modifier le déroulement normal des purges desdits pièges.

Elle propose pour cela un procédé de diagnostic d'un piège à oxydes d'azote de moteur à combustion interne, ledit piège étant apte à décomposer, pendant une étape de purge, les oxydes d'azote stockés dans le piège par réaction avec du carburant du moteur, ledit procédé comprenant :

- une étape de détermination de la richesse à l'entrée et de la richesse à la sortie du piège pendant la durée de la purge ;
- une étape de calcul d'au moins un critère de diagnostic à partir d'un ensemble de paramètres comportant au moins la richesse à l'entrée et/ou la richesse à la sortie ; et,
- une étape de jugement de l'état bon ou défaillant du piège basé sur la comparaison dudit critère de diagnostic avec un seuil,

ledit procédé étant caractérisé en ce qu'il comprend en outre :

- une étape de détermination d'une valeur de richesse filtrée à l'entrée du piège et d'une valeur de richesse filtrée à la sortie du piège pendant la durée de la purge ;
- une étape de calcul :

    i. d'un premier critère de diagnostic Cam, égal à l'intégrale temporelle, sur la durée de la purge, de la valeur absolue de la différence entre la richesse à l'entrée du piège et la richesse filtrée à l'entrée du piège, et
    ii. d'un deuxième critère de diagnostic Cav, égal à l'intégrale temporelle, sur la durée de la purge, de la valeur absolue de la différence entre la richesse à la sortie du piège et la richesse filtrée à la sortie du piège ;

- une étape de comparaison du premier critère de diagnostic Cam avec un premier seuil Sam ;
- une étape de comparaison du deuxième critère de diagnostic Cav avec un deuxième seuil Sav ; et,
- une étape de jugement de l'état défaillant du piège lorsque le premier critère Cam est supérieur au premier seuil Sam et que le deuxième critère Cav est supérieur au deuxième seuil Sav.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 illustre un dispositif de diagnostic d'un piège à oxydes d'azote apte à la mise en oeuvre du procédé selon l'invention ;
- les figures 2 et 3 sont des graphiques représentant l'évolution de la richesse à l'entrée et à la sortie d'un piège à oxydes d'azote pendant une purge, dans un dispositif conforme à la figure 1, respectivement pour un piège bon et pour un piège défaillant ; et,
- la figure 4 est une illustration d'un mode de réalisation des étapes du procédé selon l'invention.

DESCRIPTION DETAILLEE DES FIGURES

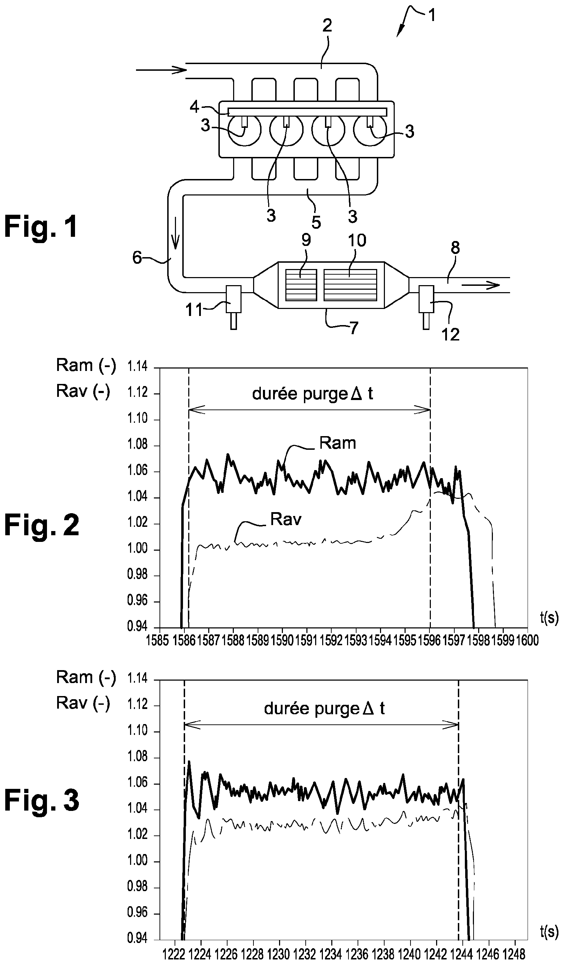

Sur la figure 1, on a représenté un moteur 1 à combustion interne, par exemple un moteur diesel de véhicule automobile. Le moteur 1 est alimenté en air par un collecteur d'admission 2 et en carburant, par exemple du gazole, par une pluralité d'injecteurs 3 montés sur une rampe commune 4 d'alimentation en carburant.

Le moteur 1 est équipé d'un circuit d'échappement des gaz brûlés, comprenant un collecteur d'échappement 5, une conduite d'échappement 6, un dispositif de traitement 7 des émissions polluantes du moteur 1 et un pot d'échappement 8 par lequel les gaz d'échappement sont évacués dans l'atmosphère.

Bien entendu, le moteur peut être du type suralimenté et/ou associé à au moins un circuit de recirculation des gaz d'échappement sans pour autant sortir du cadre de l'invention.

Le dispositif de traitement 7 des émissions polluantes se présente sous la forme d'une enveloppe métallique (ou « canning ») de forme sensiblement cylindrique terminée à ses deux extrémités par deux cônes de liaison respectivement avec la conduite d'échappement 6 et le pot d'échappement 8.

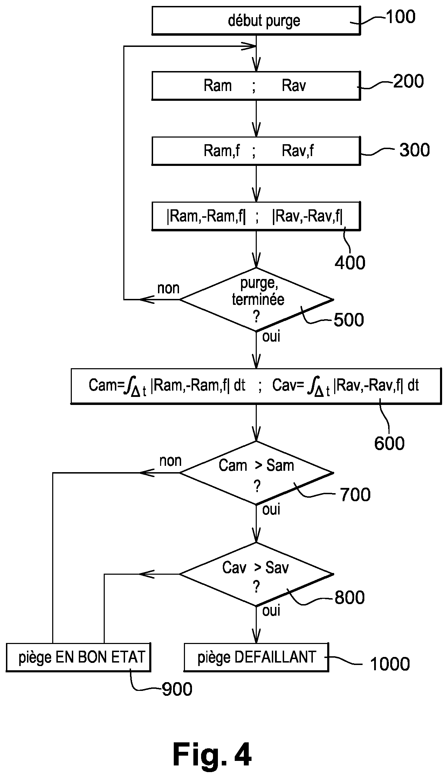

Cette enveloppe métallique contient un piège à oxydes d'azote 9. De manière non limitative, elle peut comprendre aussi un autre dispositif 10 de traitement des gaz d'échappement, par exemple un filtre à particules 10 ou un catalyseur d'oxydation 10, qui est disposé ici en aval du piège 9 (dans le sens de circulation des gaz d'échappement figuré par les flèches représentées sur la figure 4).

Le piège à oxydes d'azote 9 stocke une partie des émissions de $NO_x$ du moteur 1 quand celui-ci fonctionne en mélange pauvre. Périodiquement, lorsqu'une phase de fonctionnement du moteur 1 en mélange riche (dite : phase de régénération, ou phase de purge) est déclenchée, le piège 9 réduit les $NO_x$ en molécules d'azote $N_2$ et de dioxyde de carbone $CO_2$ sous l'action de réducteurs, c'est-à-dire de molécules de monoxyde de carbone et d'hydrocarbures imbrûlés émises par le moteur 1.

Le piège à oxydes d'azote 9 est associé à des moyens de détermination de la richesse des gaz d'échappement du moteur 1 respectivement la richesse à l'entrée Ram et la richesse à la sortie Rav du piège 9, par exemple respectivement une sonde à oxygène amont 11, disposée sur la conduite d'échappement 6 en amont du piège 9, et une sonde à oxygène aval 12, disposée sur le pot d'échappement 8 en aval du piège 9.

Un calculateur électronique du moteur (non représenté) est relié au moteur 1, et à un ensemble de capteurs et d'actionneurs comprenant au moins les sondes à oxygène amont 11 et aval 12 et les injecteurs 3.

De manière classique, le calculateur comprend des moyens de réglage du moteur 1 en fonctionnement normal, dans lequel il ajuste les injections de carburant dans le moteur 1 de manière à produire le couple nécessaire à l'entraînement du véhicule, le piège 9 étant en mode de stockage des oxydes d'azote.

Il comprend aussi des moyens de détection d'un besoin de purge du piège 9, par exemple des moyens aptes à vérifier que la masse d'oxydes d'azote contenue dans le piège 9 a atteint un seuil.

Il comprend alors des moyens de réglage du moteur 1 dans un mode de purge du piège 9, dans lequel du carburant est injecté dans des proportions supérieures à la stoechiométrie. Par exemple, la richesse est réglée à une valeur moyenne qui est généralement comprise entre 1,04 et 1,06, typiquement voisine de 1,05, qui représente un bon compromis entre la durée de la purge et la quantité de carburant consommée.

Le calculateur comprend des moyens de détermination d'une valeur de richesse filtrée à l'entrée du piège Ram,f et d'une valeur de richesse filtrée à la sortie du piège Rav,f , par exemple des filtres passe-bas aptes à filtrer respectivement les signaux de richesse à l'entrée Ram et à la sortie Rav du piège reçus respectivement des sondes à oxygène amont 11 et aval 12.

Le calculateur comprend des moyens de détection de la fin de la purge du piège 9. Par exemple, il peut vérifier que la valeur de la richesse aval Rav reçu de la sonde à oxygène aval 12 rejoint la valeur de la richesse amont Ram reçu de la sonde à oxygène aval 11. En variante, il peut vérifier que la valeur de la richesse aval Rav atteint une valeur de richesse supérieure à 1 prédéterminée, par exemple 1,04 comme sur les figures 2 et 3.

Le calculateur comprend d'une part des moyens de calcul de la valeur absolue | Ram - Ram,f| de la différence entre la richesse à l'entrée du piège Ram et la richesse filtrée à l'entrée du piège Ram,f.

Le calculateur comprend d'autre part des moyens de calcul de la valeur absolue |Rav - Rav,f| de la différence entre la richesse à la sortie du piège Rav et la richesse filtrée à la sortie du piège Rav,f.

Le calculateur comprend des moyens de calcul d'un premier critère de diagnostic Cam qui est égal à l'intégrale temporelle, pendant la durée $\Delta t$ de la purge, de la valeur absolue de la différence entre la richesse à l'entrée du piège Ram et la richesse filtrée à l'entrée du piège Ram,f , selon l'équation :

$$\text{(Eq.1)} \qquad \text{Cam} = \int_{\Delta t} \left| \text{Ram} - \text{Ram,f} \right| {}_*\text{dt}$$

Le calculateur comprend des moyens de calcul d'un deuxième critère de diagnostic Cav qui est égal à l'intégrale temporelle, pendant la durée $\Delta t$ de la purge, de la valeur absolue de la différence entre la richesse à la sortie du piège Rav et la richesse filtrée à la sortie du piège Rav,f , selon l'équation :

$$\text{(Eq.2)} \qquad \text{Cam} = \int_{\Delta t} \left| \text{Rav} - \text{Rav,f} \right| {}_*\text{dt}$$

Le calculateur comprend des moyens de comparaison du premier critère de diagnostic Cam avec un premier seuil de diagnostic Sam , et des moyens de comparaison du deuxième critère de diagnostic avec un deuxième seuil de diagnostic Sav.

Le calculateur comprend des moyens aptes à établir que le piège 9 est bon quand le premier critère Cam est inférieur au premier seuil Sam. En variante, il peut comprendre des moyens aptes à établir que le diagnostic du piège 9 est impossible et à basculer le réglage du moteur dans son mode de fonctionnement normal jusqu'à la prochaine purge.

Le calculateur comprend des moyens aptes à établir que le piège 9 est bon quand le premier critère Cam est supérieur au premier seuil Sam et que le deuxième critère Cav est inférieur au deuxième seuil Sav.

Le calculateur comprend des moyens aptes à établir que le piège 9 est défaillant quand le premier critère Cav est supérieur au premier seuil Sam et que le deuxième critère est supérieur au deuxième seuil Sav.

Le calculateur, ainsi que le moteur 1 et l'ensemble des composants représentés sur la figure 1 et qui viennent d'être décrits, font partie d'un dispositif de diagnostic pour la mise en oeuvre du procédé selon l'invention.

Les figures 2 et 3 sont des graphiques représentant l'évolution de la richesse à l'entrée Ram et à la sortie Rav d'un piège à oxydes d'azote 9 pendant une purge, dans un dispositif conforme à la figure 1, respectivement pour un piège bon et pour un piège défaillant.

La richesse à l'entrée Ram du piège est représentée en trait plein et la richesse à la sortie Rav du piège est représentée en trait mixte.

Ici, pour la purge du piège 9, on a réglé la richesse du mélange air/carburant dans le moteur 1, telle qu'elle se retrouve mesurée par la sonde amont 11, à une valeur comprise entre 1,04 et 1,07. Le début de la purge correspond à l'instant où la richesse à l'entrée Ram du piège 9 atteint 1,04. La fin de la purge correspond à l'instant où la richesse à la sortie Rav du piège atteint à son tour 1,04.

La comparaison de l'allure respective des signaux de richesse Ram, Rav représentés sur la figure 2 et sur la figure 3 permet d'illustrer le procédé de diagnostic retenu et de distinguer le comportement d'un piège bon (figure 2) de celui d'un piège défaillant (figure 3) vis-à-vis de ce procédé.

Sur la figure 2, le piège 9 bon possède une bonne efficacité de traitement. Il consomme l'ensemble des réducteurs (carburant) qui sont apportés à l'entrée du piège 9. Ce dernier n'est donc pas sensible aux oscillations de richesse Ram de la sonde amont 11. Comme peu de réducteurs sont évacués à la sortie du piège 9, le signal Rav de la sonde aval 12 oscille beaucoup moins, c'est-à-dire qu'il présente des amplitudes d'oscillations nettement moins marquées que celles du signal Ram de la sonde amont 11.

Au contraire, sur la figure 3, le piège 9 défaillant possède une efficacité cinétique faible. Il ne peut consommer qu'une partie des réducteurs apportés à l'entrée du piège, toute la quantité restante étant rejetée à la sortie du piège 9. La sonde aval 12 mesure alors un signal de richesse Rav, correspondant à ces rejets, qui est beaucoup plus proche du signal de richesse Ram de la sonde amont 11. Plus précisément, il présente des amplitudes d'oscillations qui sont nettement plus marquées que dans le cas d'un piège bon. En d'autres termes, le signal Rav de la sonde aval 12 est ici moins amorti.

On comprend de ce qui précède qu'il est possible de distinguer un piège 9 défaillant d'un piège 9 bon en quantifiant les oscillations de la sonde aval 12. De plus, on améliore de manière avantageuse la précision du diagnostic en quantifiant au préalable les oscillations de la sonde amont 11. En effet, lors de la régulation de richesse de la phase de purge, les oscillations du signal de richesse à l'entrée Ram du piège dépendent du point de fonctionnement moteur et peuvent présenter des amplitudes plus ou moins grandes. Sur certains points de fonctionnement, notamment les points de fonctionnement en stabilisé, on peut observer de très faibles oscillations de la richesse à l'entrée Ram du piège. Dans un tel cas, les oscillations de la richesse à la sortie Rav du piège sont aussi très faibles, quel que soit l'état du piège 9. Par conséquent, on pourra se limiter à déclarer un piège à oxydes d'azote défaillant uniquement quand les oscillations du signal de richesse Ram à l'entrée du piège sont fortes et que les oscillations du signal de richesse Rav à la sortie du piège sont fortes également.

La figure 4 est un organigramme des étapes d'un procédé de diagnostic d'un piège à oxydes d'azote 9 selon l'invention.

Pendant le fonctionnement du moteur 1 en mélange pauvre, le calculateur du moteur surveille l'accumulation des $NO_x$ dans le piège à oxydes d'azote 9. Lorsque la masse stockée dans le piège 9 atteint un seuil prédéterminé, le procédé de diagnostic débute, par une première étape 100 de début de purge du piège 9.

Les trois étapes suivantes du procédé sont itératives et se déroulent sur toute la durée Δt de la purge. Le procédé comprend une étape 200 de détermination de la richesse à l'entrée Ram et de la richesse à la sortie Rav du piège 9. Il comprend une étape 300 de détermination d'une valeur de richesse filtrée à l'entrée Ram,f du piège et d'une valeur de richesse filtrée à la sortie Rav,f du piège. Par exemple, le procédé applique aux signaux bruts, c'est-à-dire tels que mesurés par les sondes 11,12, un filtrage de type passe-bas qui permet d'en éliminer les micro-oscillations. Le procédé comprend une étape 400 de calcul, d'une part, de la valeur absolue de la différence entre la richesse à l'entrée Ram du piège et la richesse filtrée à l'entrée Ram,f du piège, et, d'autre part, de la valeur absolue de la différence entre la richesse à la sortie Rav du piège et la richesse filtrée à la sortie Rav,f du piège.

Après une étape 500 de fin de la purge, le procédé se poursuit par une étape de calcul 600 du premier critère de diagnostic Cam et du deuxième critère de diagnostic Cav, selon les équations 1 et 2 mentionnées plus haut.

Le procédé comprend une étape de comparaison 700 du premier critère Cam avec le premier seuil Sam. Si le premier critère Cam est inférieur au premier seuil Sam, le procédé oriente, de manière non limitative, vers une étape 900 dans laquelle le piège 9 est jugé bon. En variante, le procédé peut juger que le diagnostic est impossible, et orienter plutôt vers une étape de réglage du moteur dans son mode normal de fonctionnement en mélange pauvre, en mode de stockage des oxydes d'azote. En d'autres termes, il faudra attendre qu'une nouvelle étape 100 de début de purge se présente pour pouvoir procéder à un nouveau diagnostic. Le jugement de l'état bon ou défaillant du piège est repoussé jusqu'à au moins la purge suivante du piège (9).

Si le premier critère Cam est au contraire supérieur au premier seuil Sam, le procédé se poursuit par une étape de comparaison 800 du deuxième critère de diagnostic Cav avec le deuxième seuil Sav. Si le deuxième critère Cav est inférieur au deuxième seuil, le procédé oriente vers l'étape 900. Dans le cas contraire, il oriente vers l'étape 1000 dans laquelle le piège est jugé défaillant.

## Revendications

1. Procédé de diagnostic d'un piège à oxydes d'azote (9) de moteur (1) à combustion interne, ledit piège (9) étant apte à décomposer, pendant une étape de purge, les oxydes d'azote stockés dans le piège (9) par réaction avec du carburant du moteur (1), comprenant :

   - une étape de détermination (200) de la richesse à l'entrée (Ram) et à la sortie (Rav) du piège (9) pendant la durée ($\Delta t$) de la purge ;
   - une étape de calcul (600) d'au moins un critère de diagnostic à partir d'un ensemble de paramètres comportant au moins la richesse à l'entrée (Ram) et/ou la richesse à la sortie (Rav) ; et,
   - une étape de jugement (900,1000) de l'état bon ou défaillant du piège (9) basé sur la comparaison dudit critère de diagnostic avec un seuil,

   **CARACTERISE EN CE QU'**il comprend en outre :

   - une étape (300) de détermination d'une valeur de richesse filtrée à l'entrée (Ram,f) et à la sortie (Rav,f) du piège (9) pendant la durée de la purge ;
   - une étape (600) de calcul :

      i. d'un premier critère de diagnostic (Cam), égal à l'intégrale temporelle, sur la durée ($\Delta t$) de la purge, de la valeur absolue de la différence entre la richesse à l'entrée (Ram) du piège et la richesse filtrée (Ram,f) à l'entrée du piège, et
      ii. d'un deuxième critère de diagnostic (Cav), égal à l'intégrale temporelle, sur la durée ($\Delta t$) de la purge, de la valeur absolue de la différence entre la richesse à la sortie (Rav) du piège et la richesse filtrée (Rav,f) à la sortie du piège ;

   - une étape de comparaison (700) du premier critère de diagnostic (Cam) avec un premier seuil (Sam) ;
   - une étape de comparaison (800) du deuxième critère de diagnostic (Cav) avec un deuxième seuil (Sav) ; et
   - une étape de jugement (1000) de l'état défaillant du piège lorsque le premier critère (Cam) est supérieur au premier seuil (Sam) et que le deuxième critère (Cav) est supérieur au deuxième seuil (Sav).

2. Procédé de diagnostic selon la revendication 1, dans lequel le piège est jugé bon lorsque le premier critère (Cam) est inférieur au premier seuil (Sam), ou lorsque le premier critère (Cam) est supérieur au premier seuil (Sam) et que le deuxième critère (Cav) est inférieur au deuxième seuil (Sav).

3. Procédé de diagnostic selon la revendication 1, dans lequel, lorsque le premier critère (Cam) est inférieur au premier seuil (Sam), le jugement de l'état bon ou défaillant du piège est repoussé jusqu'à au moins l'étape suivante de purge du piège (9).

4. Procédé de diagnostic selon l'une quelconque des revendications 1 à 3, dans lequel les valeurs de richesse filtrées à l'entrée (Ram,f) et à la sortie (Rav,f) du piège (9) sont obtenues par un filtrage de type filtre passe-bas.

## Patentansprüche

1. Verfahren zur Diagnose einer Stickoxidfalle (9) eines Verbrennungsmotors (1), wobei die Falle (9) geeignet ist, während eines Schrittes der Entleerung die in der Falle (9) gespeicherten Stickoxide durch Reaktion mit Kraftstoff des Motors (1) zu zersetzen, umfassend:

- einen Schritt der Bestimmung (200) der Anreicherung am Eingang (Ram) und am Ausgang (Rav) der Falle (9) während der Dauer ($\Delta$t) der Entleerung;
- einen Schritt der Berechnung (600) wenigstens eines Diagnosekriteriums aus einer Gesamtheit von Parametern, die wenigstens die Anreicherung am Eingang (Ram) und/oder die Anreicherung am Ausgang (Rav) umfasst; und
- einen Schritt der Beurteilung (900, 1000) des Zustands der Falle (9) als gut oder schwach, basierend auf dem Vergleich des Diagnosekriteriums mit einem Schwellenwert,

**dadurch gekennzeichnet, dass** es außerdem umfasst:

- einen Schritt (300) der Bestimmung eines Wertes der gefilterten Anreicherung am Eingang (Ram,f) und am Ausgang (Rav,f) der Falle (9) während der Dauer der Entleerung;
- einen Schritt (600) der Berechnung:

    i. eines ersten Diagnosekriteriums (Cam), das gleich dem Zeitintegral, über die Dauer ($\Delta$t) der Entleerung, des absoluten Betrages der Differenz zwischen der Anreicherung am Eingang (Ram) der Falle und der gefilterten Anreicherung (Ram,f) am Eingang der Falle ist, und
    ii. eines zweiten Diagnosekriteriums (Cav), das gleich dem Zeitintegral, über die Dauer ($\Delta$t) der Entleerung, des absoluten Betrages der Differenz zwischen der Anreicherung am Ausgang (Rav) der Falle und der gefilterten Anreicherung (Rav,f) am Ausgang der Falle ist;

- einen Schritt des Vergleichs (700) des ersten Diagnosekriteriums (Cam) mit einem ersten Schwellenwert (Sam);
- einen Schritt des Vergleichs (800) des zweiten Diagnosekriteriums (Cav) mit einem zweiten Schwellenwert (Sav); und
- einen Schritt der Beurteilung (1000) des Zustands der Falle als schwach, wenn das erste Kriterium (Cam) größer als der erste Schwellenwert (Sam) ist und wenn das zweite Kriterium (Cav) größer als der zweite Schwellenwert (Sav) ist.

2. Verfahren zur Diagnose nach Anspruch 1, wobei die Falle als gut beurteilt wird, wenn das erste Kriterium (Cam) kleiner als der erste Schwellenwert (Sam) ist, oder wenn das erste Kriterium (Cam) größer als der erste Schwellenwert (Sam) ist und wenn das zweite Kriterium (Cav) kleiner als der zweite Schwellenwert (Sav) ist.

3. Verfahren zur Diagnose nach Anspruch 1, wobei, wenn das erste Kriterium (Cam) kleiner als der erste Schwellenwert (Sam) ist, die Beurteilung des Zustands der Falle als gut oder schwach wenigstens bis zum folgenden Schritt der Entleerung der Falle (9) aufgeschoben wird.

4. Verfahren zur Diagnose nach einem der Ansprüche 1 bis 3, wobei die Werte der gefilterten Anreicherung am Eingang (Ram,f) und am Ausgang (Rav,f) der Falle (9) durch eine Filterung vom Typ eines Tiefpassfilters gewonnen werden.

**Claims**

1. Method for diagnosing a nitrogen oxide trap (9) of an internal combustion engine (1), the said trap (9) being able, during a purge step, to break down the nitrogen oxides stored in the trap (9) by reaction with fuel from the engine (1), comprising:

- a step (200) of determining the richness at the inlet (Ram) and at the outlet (Rav) of the trap (9) for the duration ($\Delta$t) of the purge;
- a step (600) of calculating at least one diagnostic criterion from a set of parameters including at least the richness at the inlet (Ram) and/or the richness at the outlet (Rav); and
- a step (900, 1000) of judging whether the trap (9) status is good or defective on the basis of the comparison of the said diagnostic criterion with a threshold,

**characterized in that** it further comprises:

- a step (300) of determining a filtered value for richness at the inlet (Ram,f) and at the outlet (Rav,f) of the trap (9) for the duration of the purge;
- a step (600) of calculating:

i. a first diagnostic criterion (Cam) equal to the integral with respect to time, over the duration ($\Delta t$) of the purge, of the absolute value of the difference between the richness at the inlet (Ram) of the trap and the filtered richness (Ram,f) at the inlet of the trap, and
ii. a second diagnostic criterion (Cav), equal to the integral with respect to time, over the duration (At) of the purge, of the absolute value of the difference between the richness at the outlet (Rav) of the trap and the filtered richness (Rav,f) at the outlet of the trap;

- a step (700) of comparing the first diagnostic criterion (Cam) with a first threshold (Sam);
- a step (800) of comparing the second diagnostic criterion (Cav) with a second threshold (Sav); and
- a step (1000) of judging that the trap status is defective when the first criterion (Cam) is above the first threshold (Sam) and the second criterion (Cav) is above the second threshold (Sav).

2. Diagnostic method according to Claim 1, in which the trap is adjudged to be good when the first criterion (Cam) is below the first threshold (Sam) or when the first criterion (Cam) is above the first threshold (Sam) and the second criterion (Cav) is below the second threshold (Sav).

3. Diagnostic method according to Claim 1, in which, when the first criterion (Cam) is below the first threshold (Sam) the judgement as to whether the trap status is good or defective is postponed at least until the next step of purging of the trap (9).

4. Diagnostic method according to any one of Claims 1 to 3, in which the filtered values of richness of the inlet (Ram,f) and at the outlet (Rav,f) of the trap (9) are obtained by a filtering of the low-pass filter type.

**Fig. 1**

Ram (-)
Rav (-)

durée purge Δ t

Ram

Rav

t(s)

1585 1586 1587 1588 1589 1590 1591 1592 1593 1594 1595 1596 1597 1598 1599 1600

**Fig. 2**

Ram (-)
Rav (-)

durée purge Δ t

t(s)

1222 1224 1226 1228 1230 1232 1234 1236 1238 1240 1242 1244 1246 1248

**Fig. 3**

**Fig. 4**

**RÉFÉRENCES CITÉES DANS LA DESCRIPTION**

**Documents brevets cités dans la description**

- FR 2940356 B1
- FR 1360331
- FR 1360334
- FR 1360337
- FR 2871849 A1